# EUROPEAN PATENT SPECIFICATION

(11) **EP 1 940 097 B1**
(45) Date of publication and mention of the grant of the patent: **28.04.2010**
(21) Application number: 06127305.8
(22) Date of filing: 28.12.2006
(51) Int. Cl.: H04L 12/58

(54) **Messaging method and server**
Verfahren und Server zur Benachrichtigung
Procédé et serveur de messagerie

(43) Date of publication of application: 02.07.2008
(73) Proprietor: Ericsson AB, 164 83 Stockholm (SE)
(72) Inventor: Beije, Magnus, 192 74, SOLLENTUNA (SE)
(74) Representative: Röthinger, Rainer

(56) References cited:
- US-A1- 2004 019 487
- TECHNICAL SPECIFICATION GROUP CORE NETWORK AND TERMINALS, 3GPP TS 23.140 V6.14.0: "Multimedia Messaging Service (MMS); Functional description; Stage 2 (Release 6)" 3RD GENERATION PARTNERSHIP PROJECT, [Online] September 2006 (2006-09), XP002424217 Retrieved from the Internet: URL:http://www.3gpp.org/ftp/Specs/archive/ 23_series/23.140/23140-6e0.zip> [retrieved on 2007-03-12]

## Description

### Technical field

The present invention relates to a messaging method. The present invention also relates to a corresponding messaging server, and to a computer program product comprising code for performing a corresponding method.

### Technical background

In the field of cellular communications, the ability to communicate via both voice and messaging has become very popular, and a number of communication standards have been defined. One such standard is the global system for mobile communications (GSM), defined by the European Telecommunication Standards Institute (ETSI). Within the GSM standard, a supplementary messaging service has been defined, known as a short message service (SMS). A further evolvement of the SMS standard is the more recent multimedia message service (MMS) standard. MMS messaging supports the transmission and reception of more complex and memory hungry media, such as video sequences and higher quality images.

A problem with both SMS and MMS messaging is that a mobile phone user generally has to perform a large number of steps to compose an SMS/MMS message. When for example composing a MMS message comprising a video sequence, the video sequence has to be recorded, stored locally onto the mobile phone, and appended to the MMS message, before the MMS message can be sent to an intended recipient.

A proposed solution to the tedious and time consuming compilation of SMS/MMS messages is disclosed in US 2004/0019487. A user is able to compose, send and retrieve SMS or MMS messages using a multi-modal interface (e.g. a grammar-based speech engine, a touch screen, or a similar input device), which allows the user to compile the SMS/MMS message with significantly less effort In a fraction of the time required by conventional methods.

However, such a system is not suitable for use in a general mobile phone, as the multi-modal functionalities consumes a large amount of memory and computational power, resulting in implementation issues in mobile phones with limited memory and processing power. Furthermore, a mobile device using for example a grammar-based speech engine is generally limited to only one language, resulting in expensive customizations when releasing new mobile phone models spanning different languages.

The specification 3GPP TS 23.140 V6.14.0 (2006-09) discloses a multimedia message service (MMS). An originator MMS user agent in a sending mobile terminal submits a terminal-originated multimedia message to an originator MMS relay/server using a multimedia message submit request, which contains MMS control information and the multimedia content. The multimedia message is forwarded from the originator MMS relay/server to a recipient MMS relay/server. The MMS service provides a notification about the multimedia message from the recipient MMS relay/server to a corresponding recipient MMS user agent in a receiving mobile terminal. Such MMS user agent acknowledges the successful reception of the notification about the multimedia message. The recipient MMS user agent issues to the recipient MMS relay/server a request to initiate the retrieval process of the multimedia message. The recipient MMS relay/server transmits the control information and the multimedia content.

### Object of the invention

There is therefore a need for an improved method for providing a mobile messaging service, and more specifically that overcome or at least alleviates the problem with implementation issues in mobile phones with limited memory and processing power.

### Summary of the invention

The above object is met by a novel messaging method as defined in claim 1, and a corresponding messaging server as defined in claim 7. The appended subclaims define advantageous embodiments in accordance with the present invention.

According to an aspect of the invention, there is provided a messaging method for a communication network, comprising the steps of receiving a request from a first communication device for sending a video message intended for a second communication device, transmitting a video message initiation to the first communication device, receiving a live feed video signal from the first communication device, storing the received video signal as a video message, for each video message transmitting a notification of the video message to the second communication device, and upon receipt of a request from the second communication device for receiving the video message, transmitting the video message to the second communication device.

In the context of the present invention, the expression "live feed video signal" is understood to mean a video sequence that is streamed from or to a communication device. Thus, according to the invention, the video message is not stored locally onto the communication device, except some smaller caching that might be necessary due to implementation constrains of the communication method or device used. Therefore, the memory constrains for the communication devices can be set much lower than according to prior art.

Furthermore, as the storage of the video message is not done locally onto the communication device, the video messaging method according to the present invention uses a limited amount of the communication devices processing power, thus lowering the computational capacity constrains for the communication devices. It is therefore possible to implement the method according to the present invention even in an environment where communication devices with limited memory and processing power are used.

According to the invention, a notification of the video message is generally always transmitted to the second communication device after the live feed video signal is stored as a video message. When receiving the video message notification, the user of the second communication device is instructed how to retrieve and view the video message. If the user of the second communication device decides to receive the video message, it is as an alternative possible to store the video message locally onto the second communication device.

Another advantage with the present invention is that the tedious and time consuming compilation steps preformed according to prior art, for compiling for example a MMS message, can be omitted. The user of a communication device instead only has to send a request for sending a video message to an intended communication device, after which the user will be invited, by means of the video message initiation, to record a video sequence which will be delivered to the intended communication device. This is especially advantageous in the case where the user of the communication device is a novice user having limited knowledge of how to handle a communication device, or where the user has limited reading and writing skills. Furthermore, it will according to the present invention be simple to implement a large plurality of different languages, for example for inviting a user to record a video sequence, as language related execution steps do not have to be implemented locally onto the communication device. Another further advantage with the present invention is flexibility, as functions programmed into an end-user device cannot be changed easily, whilst server based menus can be updated/modified based on user behavior.

The request for sending a video message can comprises information about the intended receiving second communication device. The request might also be appended with a control command that for example contains information about the type of message that a user wants to send (i.e. video message), delivery options, etc. Also, the control command might be a reply command, such as in a case where the user of the second communication device wants to reply to the video message sent from the user of the first communication device. In such a case, the user of the second communication device might be invited to reply to the video message, for example after receiving/viewing the video message, and at that point send a request for sending a video message, where the request has an appended reply command. Thereafter, the first and second communication devices "swaps place", such that the steps indicated to comprise interactions with the first communication device are preformed by the second communication device, and vice versa.

Preferably, the messaging method is performed by a messaging server. Also, at least one of the communication devices is a mobile terminal, such as a mobile telephone, a PDA (Personal Digital Assistant), a wireless laptop, or a similar device. Accordingly, the communication between the mobile terminals and the messaging server is preferably preformed over a mobile communication network.

In an embodiment, the video message initiation is a video prompt. The video prompt might be transmitted from the messaging server to the first communication device as a live feed video prompt. Alternatively, the video prompt might be pre-stored onto the communication device (such as for example in the case with an intelligent client implemented onto a communication device), whereby the video message initiation is a command that trigger the pre-stored video prompt. Such a command may alternatively trigger a GUI of the first communication device to invite the user to record the video sequence.

In another embodiment, the stored video message comprises an audio portion and a video portion, and the video message transmitted to the second communication device only comprises the audio portion of the video message. This is especially advantageous when dealing with mobile terminals adapted to different communication standards. An example is the case where the transmitting first communication device is a 3G mobile phone, and the receiving second communication device is a 2G mobile phone. Here, it is necessary to only deliver the voice portion of the video message as the 2G mobile phone might be incapable of displaying a video sequence.

Accordingly, it is possible to automatically select if the delivered video message should only include the audio portion, allow the user of the second communication device to select if he wants to receive only the audio portion, and/or inform the user of the first communication device that the second communication device is incapable of displaying a video sequence, such that the user can take appropriate measures. Furthermore, it would be possible to only include still images extracted from the video portion of the video message when providing the video message to the second communication device.

Furthermore, it is advantageous if the notification of the video message is in the form of an SMS message, an MMS message, a WAP-push message, or a similar standardized message. In such a case, the SMS message at least contains instructions of how to retrieve the video message, such as the address to the messaging server storing the video message.

According to another aspect of the present invention there is provided a messaging server for a communication network, the messaging server comprising means for receiving a request from a first communication device for sending a video message intended for a second communication device, means for transmitting a video message initiation to the first communication device, means for receiving a live feed video signal from the first communication device, means for storing the received video signal as a video message, means for, for each video message, transmitting a notification of the video message to the second communication device, and means for upon receipt of a request from the second communication device for receiving the video message, transmitting the video message to the second communication device.

The messaging server provides for, in a similar manner as describe above, a user with limited knowledge of messaging to transmit a video message to an intended recipient in a more convenient manner than according to

### prior art.

Furthermore, the messaging server as described above might together with at least a first and a second communication device form part of a mobile communication system.

Additionally, the above-mentioned and other objects of the present invention are achieved through a computer program adapted to run on a messaging server according to the present invention.

According to a still further aspect of the present invention there is provided a computer program product comprising a computer readable medium having stored thereon computer program means for causing a computer to provide a messaging service, wherein the computer program product comprises code for receiving a request from a first communication device for sending a video message intended for a second communication device, code for transmitting a video message initiation to the first communication device, code for receiving a live feed video signal from the first communication device, code for storing the received video signal as a video message, code for transmitting a notification of the video message, for each video message, to the second communication device, and code for upon receipt of a request from the second communication device for receiving the video message, transmitting the video message to the second communication device.

The computer is preferably a messaging server, and the computer readable medium is one of a removable non-volatile random access memory, a hard disk drive, a floppy disk, a CD-ROM, a DVD-ROM, or a similar computer readable medium known in the art.

### Brief description of the drawings

These and other aspects of the present invention will now be described in more detail, with reference to the appended drawings showing currently preferred embodiments of the invention, in which:
Figure 1 illustrates a block diagram of a mobile communication system comprising a plurality of mobile terminals and a messaging server adapted to perform a messaging method according the present invention; and
Figure 2 is a flow chart illustrating the method steps according the present invention.

### Detailed description of the preferred embodiments

The present invention will now be described more fully hereinafter with reference to the accompanying drawings, on which currently preferred embodiments of the invention are shown. This invention may, however, be embodied in many different forms and should not be construed as limited to the embodiments set forth herein; rather, these embodiment are provided for thoroughness and completeness, and fully convey the scope of the invention to the skilled addressee.

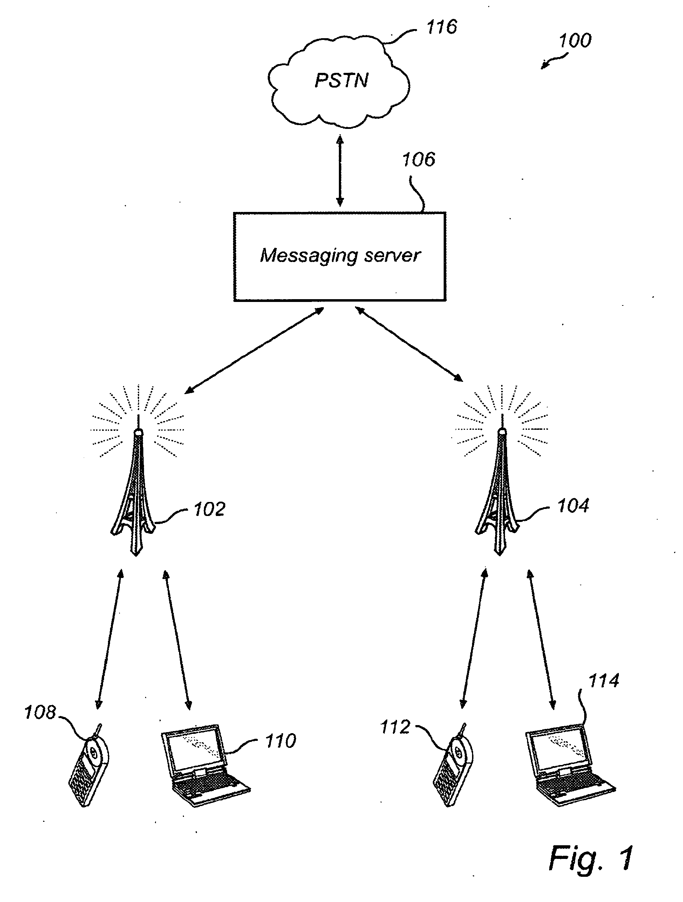

Referring now to the drawings and to figure 1 in particular, there is depicted a mobile communication system 100 comprising two base stations 102, 104 in connection with a messaging server 106. Each of the base stations 102, 104 are each connected with two different mobile terminals 108, 110, and 112, 114, respectively. The skilled addressee understands that it is possible to include more than the illustrated number of mobile terminals and base stations. The mobile terminals 108, 110, 112, 114 may be different types of mobile terminals, such as for example a combination of mobile phones, personal computers, laptops, PDAs (Personal Digital Assistants), and other communication devices with a user interface and a capability of connecting to one of the base stations 102, 104. Generally, a communication device used in a mobile communication system 100 according to the present invention comprises a camera, such as a video camera, for recording a video sequence.

Generally, the connections between the mobile terminals 108, 110, and 112, 114 and the base stations 102, 104, and the connections between the base stations 102, 104 and the messaging server 106 are wireless connections, such as a mobile communication network configured in accordance to the GSM or CDMA (Code Division Multiple Access) standard. Another example can be a WiFi/GSM combination, GSM/WiFi (WiMAX, UWB, etc.) or a WiFi adapted IP network

As understood by the skilled addressee, it is of course possible to apply the invention in a mobile communication system 100 configured to conform with different wireless communication standards. Furthermore, the connection between the base stations 102, 104 and the messaging server 106 can be wired communications, in a similar manner as a connection between the messaging server 106 and a PSTN 116 (Publicly Switched Telephone Network). Alternatively, the messaging server 106 can be connected directly to a LAN (Local Area Network), a WAN (Wide Area Network), or the Internet.

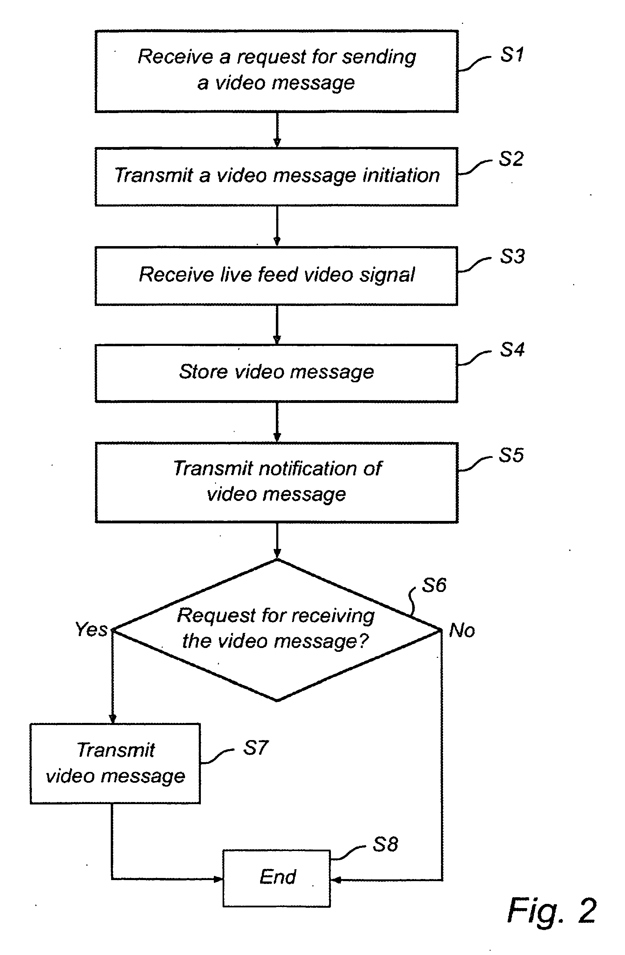

According to the present embodiment, the messaging server 106 comprises means for performing a messaging method according to the present invention. The messaging method is described in more detail below in relation to figure 2.

Furthermore, the messaging server 106 can comprise processing means (not shown) such as a controller including a microprocessor, a microcontroller, a programmable digital signal processor or another programmable device. The processing means can also be provided by a multi purpose server computer. As an alternative, a messaging server 106 can be incorporated with one or both of the base stations 102, 104, and adapted to use the processing means included in a base station for performing the messaging method.

By way of example, the operational steps S1 - S8 preformed in a mobile communication system 100 for sending a video message from a communication device to another communication device, e.g. between mobile terminal 110 and mobile terminal 112, are illustrated in figure 2.

In step S1, the messaging server 106 awaits a request from the mobile terminal 110 for sending a video message to an intended recipient, i.e. the mobile terminal 112. When the messaging server 106 receives the request, information comprised in the request is extracted and analyzed by the messaging server. In one implementation, the user of the mobile terminal 110 can simply include a prefix preceding the mobile phone number of the intended recipient (i.e. mobile terminal 112). If for example the mobile phone number of the recipient is '0707-555666', and the prefix is '*', the complete request transmitted from the mobile terminal 110 to the messaging server 106 is simply '*0707-555666'. In this case, the messaging server recognize the prefix, '*', stores the mobile phone number of the recipient, '0707-555666', and proceeds to step S2. The request might also include a control command regarding e.g. delivery options, etc.

In step S2, the messaging server 106 transmits a video message initiation in the form of a video prompt to the mobile terminal 110 in response to the received request. As mentioned above, the video message initiation can also, or instead, activate a user interface of the mobile terminal 110, or trigger a pre-stored video prompt stored locally onto the mobile terminal 110, such as for example with an intelligent client implemented onto a communication device. Such an intelligent client might be implemented using for example platform independent technology, such as Java or similar. Furthermore, it would be possible to include more information with the video prompt, such as for example short commercial video advertisements, or similarly. Alternatively, an audio message and optionally a still image can be transmitted to the mobile terminal 110. The video prompt preferably includes a short, 5 - 10 seconds, instruction to the user of the mobile terminal 110 on how to record a video sequence.

In step S3, upon being presented with the video prompt, the user of the mobile terminal 110 records the video message, and the video message is transmitted to the messaging server 106 that receives the video sequence as a live feed video signal. The video sequence is not stored locally onto the mobile terminal 110, but is instead transmitted directly to the messaging server 106. However, in some cases it might be necessary to cache a small portion of the video signal onto the mobile terminal 110. The size of such a cache memory comprised in a mobile terminal could be adapted in accordance with the communication method used by the mobile communication system 100.

In step S4, the video signal transmitted from the mobile terminal 110 to the messaging server 106 is stored onto the messaging server 106. For the purpose of storing a plurality of video messages, and other information, the messaging server 106 is provided with a computer writable media, such as a hard-drive or similar writable media as known by the skilled addressee. The server generally organizes the video message from the mobile terminal 110 together with the related control command and the mobile phone number of the intended recipient. The organization is preferably done using a database structure.

In step S5, the messaging server 106 transmits a notification of the stored video message to the intended recipient, i.e. mobile terminal 112. The messaging server 106 generally always transmits a notification to the mobile terminal 112. However, communication errors might of course, as understood by the skilled addressee, stop the notification from arriving at the mobile terminal 112. The notification of a video message is preferably sent as an SMS message, an SMS message, an MMS message, a WAP-push message, or a similar standardized message, and preferably at least includes information on how to receive the video message. Alternatively, the type of method used for delivering a notification of a video message can depend on the control command provided by the user of the mobile terminal 110.

In step S6, the messaging server 106 awaits a request from the mobile terminal 112 for receiving the video message stored onto the messaging server 106. A user of the mobile terminal 112 is given the option to ignore the notification message. If the user of the mobile terminal 112 ignores, or similarly, the notification message, the messaging server completes in step S8. However, if the user of the mobile terminal 112 instead follows the instructions in the notification message, and sends a request to the messaging server 106 for receiving the video message, the messaging server continues to step S7.

In step S7, the messaging server 106 transmits the video message to the mobile terminal 112. The video message is transmitted as a streaming video signal, such as a live feed video signal. Thus, it is not necessary to store the video message locally onto the mobile terminal 112. However, it might be possible to give the user of the mobile terminal 112 the option to store the video message locally onto the mobile terminal 112. As described in relation to step S2, it would be possible to include a short commercial video advertisement with the delivered video message.

After the complete video message is transmitted to the mobile terminal 112, or the user of the mobile terminal 112 decides to end the reception/downloading of the video message, or due to communication errors, the messaging server completes in step S8.

However, it is possible to provide the user of the mobile terminal 112 with the option to reply to the video message. In such a case the user of the mobile terminal 112 provides a new request for transmitting a new video message to a new intended recipient (i.e. mobile terminal 110 when replying to the video message). It would also be possible to include multiple recipients when replying to a video message, or generally when transmitting a video message. Furthermore, it can be possible to forward a video message, and perform similar functions with the video message as when sending an email message.

In conclusion, there is according to the present invention provided a messaging method, in a communication network, between a first communication device and a second communication device. The video message is generally not stored locally onto the communication device (except for a small caching), resulting in the possibility to lower memory and processing constrains associated with the communication device.

It is important to note that while the present invention has been described in the context of a messaging server method, the skilled addressee will appreciate that the processes of the present invention are capable of being distributed in the form of a computer readable medium of instructions and a variety of forms and that the present invention applies equally regardless of the particular type of signal bearing media actually used to carry out the distribution. Examples of computer readable media include recordable-type media, such as a floppy disk, a hard disk drive, a RAM, CD-ROMs, DVD-ROM's, and transmission-type media, such as digital and analog communications links, wired or wireless communications links using transmission forms, such as, for example, radio frequency and light wave transmissions. The computer readable media may take the form of coded formats that are decoded for actual use in a particular data processing system

Furthermore, the skilled addressee skilled in the art realizes that the present invention by no means is limited to the preferred embodiments described above. On the contrary, many modifications and variations are possible within the scope of the appended claims. For example, it is possible to include multi-modal functionalities with the messaging server, such as for example a grammar-based speech engine for recognizing a speech command provided by a user of a mobile terminal, and transmitted to the messaging server. Furthermore, it is possible to provide for the possibility to only deliver an audio portion of the video message to the intended recipient. This is for example advantageous when sending a video message to a communication device incapable of rendering a video sequence, or when a high speed communication network is not available (e.g. switching between 3G and 2G mobile communication standards).

## Claims

1. A messaging method for a communication network (100), comprising:
- receiving a request (S1) from a first communication device (108, 110) for sending a video message intended for a second communication device (112, 114);
- transmitting (S2) a vide message initiation to the first communication device (108, 110);
- receiving (S3) a live feed video signal from the first communication device (108, 110);
- storing (S4) the received video signal as a video message;
- for each video message, transmitting (S5) a notification of the video message to the second communication device (112, 114); and
- upon receipt (56) of a request from the second communication device (112, 114) for receiving the video message, transmitting (57) the video message to the second communication device (112, 114).

2. A messaging method according to claim 1, wherein the messaging method is performed by a messaging server (106).

3. A messaging method according to any of claims 1 or 2, wherein the video message initiation is a video prompt.

4. A messaging method according to any one of the preceding claims, wherein the communication network (100) is a mobile communication network.

5. A messaging method according to any one of the preceding claims, wherein the stored video message comprises an audio portion and a video portion, and the video message transmitted to the second communication device (112, 114) only comprise the audio portion of the video message.

6. A messaging method according to any one of the preceding claims, wherein the notification of the video message is in the form of a SMS message, a MMS message, or a WAP-push message.

7. A messaging server (106) for a communication network, the messaging server comprising:
- means for receiving a request from a first communication device (108, 110) for sending a video message Intended for a second communication device (112, 114);
- means for transmitting a video message initiation to the first communication device (108, 110);
- means for receiving a live feed video signal from the first communication device (108, 110);
- means for storing the received video signal as a video message;
- means for, for each video message, transmitting a notification of the video message to the second communication device (112, 114); and
- means for, upon receipt of a request from the second communication device for receiving the video message, transmitting the video message to the second communication device (112, 114).

8. A messaging server (106) according to claim 7, wherein the video message initiation is a video prompt.

9. A messaging server (106) according to any of claims 7 or 8, wherein the communication network (100) is a mobile communication network.

10. A messaging server (106) according to any of claims 7 - 9, wherein the stored video message comprises an audio portion and a video portion, and the video message transmitted by the transmitting means to the second communication device only comprise the audio portion of the video message.

11. A messaging server (106) according to any of claims 7 - 10, wherein the notification of the video message is in the form of a SMS message, a MMS message, or a WAP-push message.

12. Mobile communication system, comprising:
- a first communication device (108, 110);
- a second communication device (112, 14); and
- a messaging server (106) according to any one of claims 7 - 11, wherein the messaging server (106) is connected to said first and said second communication device (108, 110, 112, 114) over a mobile communication network, and adapted to provide a messaging service for sending a video message from the first communication device (108, 110) to the second communication device (112, 114).

13. A computer program for performing the steps of claim 1 when the program is executed in a messaging server according to claim 7.

14. A computer program product comprising a computer readable medium having stored thereon computer program means for causing a computer to provide a messaging service, wherein the computer program product comprises:
- code for receiving a request from a first communication device (108, 110) for sending a video message intended for a second communication device (112, 114);
- code for transmitting a video message initiation to the first communication device (108, 110);
- code for receiving a live feed video signal from the first communication device (108, 110);
- code for storing the received video signal as a video message;
- code for transmitting a notification of the video message, for each video message, to the second communication device (112, 114); and
- code for upon receipt of a request from the second communication device (112, 114) for receiving the video message, transmitting the video message to the second communication device (112, 114).

15. A computer program product according to claim 14, wherein the computer Is a messaging server.

16. A computer program product according to claim 14 or 15, wherein the computer readable medium is one of a removable non-volatile random access memory, a hard disk drive, a floppy disk, a CD-ROM, and a DVD-ROM.

## Patentansprüche

1. Nachrichtenübermittlungsverfahren für ein Kommunikationsnetzwerk (100), umfassend:
- Empfangen einer Anforderung (S1) von einer ersten Kommunikationseinrichtung (108, 110) zum Senden einer Videonachricht, die für eine zweite Kommunikationseinrichtung (112, 114) vorgesehen ist;
- Senden (S2) einer Videonachrichtinitiierung zur ersten Kommunikationseinrichtung (108, 110);
- Empfangen (S3) eines live eingespeisten Videosignals von der ersten Kommunikationseinrichtung (108, 110);
- Speichern (S4) des empfangenen Videosignals als eine Videonachricht;
- Senden (S5) einer Benachrichtigung über die Videonachricht an die zweite Kommunikationseinrichtung (112, 114) für jede Videonachricht; und
- Senden (S7) der Videonachricht zur zweiten Kommunikationseinrichtung (112, 114) beim Empfangen (S6) einer Anforderung von der zweiten Kommunikationseinrichtung (112, 114) zum Empfangen der Videonachricht.

2. Nachrichtenübermittlungsverfahren nach Anspruch 1, wobei das Nachrichtenübermittlungsverfahren durch einen Nachrichtenübermittlungsserver (106) ausgeführt wird.

3. Nachrichtenübermittlungsverfahren nach einem der Ansprüche 1 oder 2, wobei die Videonachrichtinitiierung ein Videoprompt ist.

4. Nachrichtenübermittlungsverfahren nach einem der vorangegangenen Ansprüche, wobei das Kommunikationsnetzwerk (100) ein mobiles Kommunikationsnetzwerk ist.

5. Nachrichtenübermittlungsverfahren nach einem der vorangegangenen Ansprüche, wobei die gespeicherte Videonachricht einen Audiobereich und einen Videobereich umfasst und die an die zweite Kommunikationseinrichtung (112, 114) gesendete Videonachricht lediglich den Audiobereich der Videonachricht umfasst.

6. Nachrichtenübermittlungsverfahren nach einem der vorangegangenen Ansprüche, wobei die Benachrichtigung über die Videonachricht die Form einer SMS-Nachricht, einer MMS-Nachricht oder einer WAP-Push-Nachricht aufweist.

7. Nachrichtenübermittlungsserver (106) für ein Kommunikationsnetzwerk, wobei der Nachrichtenübermittlungsserver umfasst:
- Mittel zum Empfangen einer Anforderung von einer ersten Kommunikationseinrichtung (108, 110) zum Senden einer Videonachricht, die für eine zweite Kommunikationseinrichtung (112, 114) vorgesehen ist;
- Mittel zum Senden einer Videonachrichtinitiierung zur ersten Kommunikationseinrichtung (108, 110);
- Mittel zum Empfangen eines live eingespeisten Videosignals von der ersten Kommunikationseinrichtung (108, 110);
- Mittel zum Speichern des empfangenen Videosignals als eine Videonachricht;
- Mittel zum Senden einer Benachrichtigung über die Videonachricht an die zweite Kommunikationseinrichtung (112, 114) für jede Videonachricht; und
- Mittel zum Senden der Videonachricht an die zweite Kommunikationseinrichtung (112, 114) beim Empfangen einer Anforderung von der zweiten Kommunikationseinrichtung zum Empfangen der Videonachricht.

8. Nachrichtenübermittlungsserver (106) nach Anspruch 7, wobei die Videonachrichtinitiierung ein Videopromt ist.

9. Nachrichtenübermittlungsserver (106) nach einem der Ansprüche 7 oder 8, wobei das Kommunikationsnetzwerk (100) ein mobiles Kommunikationsnetzwerk ist.

10. Nachrichtenübermittlungsserver (106) nach einem der Ansprüche 7 bis 9, wobei die gespeicherte Videonachricht einen Audiobereich und einen Videobereich umfasst und die durch die Sendemittel an die zweite Kommunikationseinrichtung gesendete Videonachricht lediglich den Audiobereich der Videonachricht umfasst.

11. Nachrichtenübermittlungsserver (106) nach einem der Ansprüche 7 bis 10, wobei die Benachrichtigung über die Videonachricht die Form einer SMS-Nachricht, einer MMS-Nachricht oder einer WAP-Push-Nachricht aufweist.

12. Mobiles Kommunikationssystem, mit:
- einer ersten Kommunikationseinrichtung (108, 110);
- einer zweiten Kommunikationseinrichtung (112, 114); und
- einem Nachrichtenübermittlungsserver (106) nach einem der Ansprüche 7 bis 11, wobei der Nachrichtenübermittlungsserver (106) mit der ersten und der zweiten Kommunikationseinrichtung (108, 110, 112, 114) über ein mobiles Kommunikationsnetzwerk verbunden ist und dazu ausgebildet ist, einen Nachrichtenübermittlungsdienst zum Senden einer Videonachricht von der ersten Kommunikationseinrichtung (108, 110) an die zweite Kommunikationseinrichtung (112, 114) bereit zu stellen.

13. Computerprogramm zum Durchführen der Schritte nach Anspruch 1, wenn das Programm in einem Nachrichtenübermittlungsserver nach Anspruch 7 ausgeführt wird.

14. Computerprogrammprodukt mit einem computerlesbaren Medium, das darauf gespeicherte Computerprogrammittel aufweist, um zu bewirken, dass ein Computer einen Nachrichtenübermittlungsdienst bereitstellt, wobei das Computerprogrammprodukt umfasst:
- Code zum Empfangen einer Anforderung von einer ersten Kommunikationseinrichtung (108, 110) zum Senden einer Videonachricht, die für eine zweite Kommunikationseinrichtung (112, 114) vorgesehen ist;
- Code zum Senden einer Videonachrichtinitiierung an die erste Kommunikationseinrichtung (108, 110);
- Code zum Empfangen eines live eingespeisten Videosignals von der ersten Kommunikationseinrichtung (108, 110);
- Code zum Speichern des empfangenen Videosignals als eine Videonachricht;
- Code zum Senden einer Benachrichtigung über die Videonachricht an die zweite Kommunikationseinrichtung (112, 114) für jede Videonachricht; und
- Code zum Senden der Videonachricht an die zweite Kommunikationseinrichtung (112, 114) beim Empfangen einer Anforderung von der zweiten Kommunikationseinrichtung (112, 114) zum Empfangen der Videonachricht.

15. Computerprogrammprodukt nach Anspruch 14, wobei der Computer ein Nachrichtenübermittlungsserver ist.

16. Computerprogrammprodukt nach Anspruch 14 oder 15, wobei das computerlesbare Medium ein entfernbarer nicht flüchtiger Speicher mit wahlfreiem Zugriff, ein Festplattenlaufwerk, ein Floppydisk-Laufwerk, ein CD-ROM oder ein DVD-ROM ist.

## Revendications

1. Procédé de messagerie pour un réseau de communication (100), comprenant:
- la réception d'une demande (S1) d'un premier dispositif de communication (108, 110) pour l'envoi d'un message vidéo destiné à un deuxième dispositif de communication (112, 114);
- la transmission (52) d'une initiation de message vidéo au premier dispositif de communication (108, 110);
- la réception (S3) d'un signal vidéo en flux actif du premier dispositif de communication (108, 110);
- le stockage (S4) du signal vidéo reçu comme un message vidéo;
- pour chaque message vidéo, la transmission (S5) d'une notification du message vidéo au deuxième dispositif de communication (112, 114); et
- sur réception (S6) d'une demande du deuxième dispositif de communication (112, 114) de réception du message vidéo, la transmission (S7) du message vidéo au deuxième dispositif de communication (112, 114).

2. Procédé de messagerie selon la revendication 1, dans lequel le procédé de messagerie est mis en oeuvre par un serveur de messagerie (106).

3. Procédé de messagerie selon l'une des revendications 1 ou 2, dans lequel l'initiation de message vidéo est une invite vidéo.

4. Procédé de messagerie selon l'une des revendications précédentes, dans lequel le réseau de communication (100) est un réseau de communication mobile.

5. Procédé de messagerie selon l'une des revendications précédentes, dans lequel le message vidéo mémorisé comprend une partie audio et une partie vidéo, et le message vidéo transmis au deuxième dispositif de communication (112, 114) ne comprend que la partie audio du message vidéo.

6. Procédé de messagerie selon l'une des revendications précédentes, dans lequel la notification du message vidéo est sous la forme d'un message SMS, d'un message MMS ou d'un message WAP-push.

7. Serveur de messagerie (106) pour un réseau de communication, le serveur de messagerie comprenant:
- un moyen de réception d'une demande d'un premier dispositif de communication (108, 110) d'envoi d'un message vidéo destiné à un deuxième dispositif de communication (112, 114);
- un moyen de transmission d'une initiation de message vidéo au premier dispositif de communication (108, 110);
- un moyen de réception d'un signal vidéo en flux actif du premier dispositif de communication (108, 110);
- un moyen de stockage du signal vidéo reçu comme un message vidéo;
- un moyen, pour chaque message vidéo, de transmission d'une notification du message vidéo au deuxième dispositif de communication (112, 114); et
- un moyen de transmission du message vidéo au deuxième dispositif de communication (112, 114), sur réception d'une demande du deuxième dispositif de communication de réception du message vidéo.

8. Serveur de messagerie (106) selon la revendication 7, dans lequel l'initiation de message vidéo est une invite vidéo.

9. Serveur de messagerie (106) selon l'une des revendications 7 ou 8, dans lequel le réseau de communication (100) est un réseau de communication mobile.

10. Serveur de messagerie (106) selon l'une des revendications 7 à 9, dans lequel le message vidéo stocké comprend une partie audio et une partie vidéo, et le message vidéo transmis par le moyen de transmission au deuxième dispositif de communication ne comprend que la partie audio du message vidéo.

11. Serveur de messagerie (106) selon l'une des revendications 7 à 10, dans lequel la notification du message vidéo est sous la forme d'un message SMS, d'un message MMS ou d'un message WAP-push.

12. Système de communication mobile, comprenant:
- un premier dispositif de communication (108, 110);
- un deuxième dispositif de communication (112, 114); et
- un serveur de messagerie (106) selon l'une des revendications 7 à 11, dans lequel le serveur de messagerie (106) est connecté auxdits premier et deuxième dispositifs de communication (108, 110, 112, 114) sur un réseau de communication mobile et adapté pour fournir un service de messagerie pour envoyer un message vidéo du premier dispositif de communication (108, 110) au deuxième dispositif de communication (112, 114).

13. Programme informatique pour mettre en oeuvre les étapes de la revendication 1, lorsque le programme est exécuté dans un serveur de messagerie selon la revendication 7.

14. Produit de programme informatique comprenant un support lisible par un ordinateur ayant, mémorisé sur celui-ci, un moyen de programme informatique pour faire en sorte qu'un ordinateur fournisse un service de messagerie, dans lequel le produit de programme informatique comprend:
- un code pour recevoir une demande d'un premier dispositif de communication (108, 110) d'envoi d'un message vidéo destiné à un deuxième dispositif de communication (112, 114);
- un code pour transmettre une initiation de message vidéo au premier dispositif de communication (108, 110);
- un code pour recevoir un signal vidéo en flux actif du premier dispositif de communication (108, 110);
- un code pour mémoriser le signal vidéo reçu comme un message vidéo;
- un code pour transmettre une notification du message vidéo, pour chaque message vidéo, au deuxième dispositif de communication (112, 114); et
- à réception d'une demande du deuxième dispositif de communication (112, 114) de réception du message vidéo, un code pour transmettre le message vidéo au deuxième dispositif de communication (112, 114).

15. Produit de programme informatique selon la revendication 14, dans lequel l'ordinateur est un serveur de messagerie.

16. Produit de programme informatique selon la revendication 14 ou 15, dans lequel le support lisible par un ordinateur est l'un d'une mémoire à accès aléatoire non volatile amovible, d'un lecteur de disque dur, d'une disquette, d'un CD-ROM, et d'un DVD-ROM.
